# EUROPÄISCHE PATENTSCHRIFT

(11) **EP 2 771 717 B1**
(45) Veröffentlichungstag und Bekanntmachung des Hinweises auf die Patenterteilung: **30.10.2019**
(21) Anmeldenummer: 12772894.7
(22) Anmeldetag: 25.09.2012
(51) Int. Cl.: G01T 1/11

(54) **ORTSDOSIMETER ZUR MESSUNG DER UMGEBUNGSÄQUIVALENTDOSIS MIT EINFACHEM AUFBAU**
LOCAL DOSIMETER FOR MEASURING THE AMBIENT EQUIVALENT DOSE HAVING A SIMPLE DESIGN
DOSIMÈTRE D'AMBIANCE DE STRUCTURE SIMPLE POUR MESURER LE DÉBIT D'ÉQUIVALENT DE DOSE AMBIANT

(30) Priorität: 27.10.2011 DE 102011054846
(43) Veröffentlichungstag der Anmeldung: 03.09.2014
(73) Patentinhaber: GSI Helmholtzzentrum für Schwerionenforschung GmbH, 64291 Darmstadt (DE)
(72) Erfinder: FEHRENBACHER, Georg, 64367 Mühltal (DE); SUROWIEC, Alicja, 63303 Dreieich (DE); ENGERT, Tobias, 69518 Abtsteinach (DE); POPPE, Christian, 64853 Otzberg (DE)
(86) Internationale Anmeldenummer: PCT/EP2012/068863
(87) Internationale Veröffentlichungsnummer: WO 2013/060541

(56) Entgegenhaltungen:
- EP-A2- 2 293 114
- WO-A1-90/08330
- WO-A2-2009/062639
- DE-A1- 3 903 113
- US-A- 3 100 262
- US-A- 4 465 936
- US-A- 4 999 503
- US-A- 5 578 830

## Beschreibung

Die Erfindung betrifft eine Ortsdosimetervorrichtung mit mindestens einem Streukörper, wobei der zumindest eine Streukörper zumindest zwei Streukörper-Baugruppen aufweist.

In Gebieten, in denen mit der Freisetzung von ionisierender Strahlung zu rechnen ist (beispielsweise beim Umgang mit radioaktiven Stoffen sowie beim Betrieb von Teilchenbeschleunigern, Röntgenanlagen, Störstrahlern, kerntechnischen Anlagen und dergleichen) sind zum Schutz von Personen Strahlenschutzbereiche einzurichten. In diesen sind jeweils bestimmte Regularien einzuhalten. Insbesondere ist es erforderlich, dass die sich in den jeweiligen Strahlenschutzbereichen aufhaltenden Personen kontinuierlich überwacht werden und/oder dass die Strahlenschutzbereiche selbst kontinuierlich auf die in diesen vorherrschende Strahlung überwacht werden. Zu diesem Zweck werden so genannte Dosimeter eingesetzt. Bei der Überwachung von Personen spricht man in der Regel von Personendosimetern, während bei der Überwachung von Räumlichkeiten so genannte Ortsdosimeter eingesetzt werden.

Je nach der realistischerweise zu erwartenden Art und Dosis der ionisierenden Strahlung sind zur Strahlenschutzüberwachung verschiedenartige Messungen - und damit auch verschiedenartige Dosimeter zu verwenden. In einer Arztpraxis, in der sich ein Röntgengerät befindet, ist beispielsweise eine Messung der Photonenstrahlung (insbesondere im Röntgenbereich) erforderlich. Demgegenüber ist beispielsweise bei Teilchenbeschleunigern neben der Überwachung der Photonenstrahlung auch beispielsweise eine Messung des Neutronenstrahlungspegels erforderlich.

Nach dem derzeitig gültigen Regelwerk in der Bundesrepublik Deutschland ist beispielsweise beim Vorhandensein von Röntgenstrahlungsquellen als Messgröße für die Ortsdosis einerseits die Umgebungs-Äquivalenzdosis H*(10) und die Richtungs-Äquivalenzdosis H'(0,07) zu messen. Gemäß der gültigen Vorschriften sind dabei je nach zu erwartendem Strahlungspegel unterschiedliche Messungenauigkeiten zulässig, wie beispielsweise eine Messungenauigkeit von ±40 % nach der PTB-A 23.3-Anforderung.

Die Umgebungs-Äquivalenzdosis H*(10) ist die am interessierenden Punkt im tatsächlichen Strahlungsfeld auftretende Äquivalenzdosis, die im zugehörigen ausgerichteten und aufgeweiteten Strahlungsfeld in 10 mm Tiefe in der ICRU-Kugel (ICRU = International Commission on Radiation Units and Measurements) auf dem der Strahleneinfallsrichtung entgegengesetzten Radiusvektor erzeugt würde.

Grundsätzlich existiert eine Vielzahl von Dosimetervorrichtungen zur Messung von Strahlungsdosen, insbesondere auch der Umgebungs-Äquivalenzdosis H*(10). Beispielsweise existieren aktive (in der Regel elektronisch arbeitende) Ortsdosimeter, wie beispielsweise Szintillationsdosimeter, Geiger-Müller-Zählrohre, Proportionalzählrohre und Ionisationskammern.

Weiterhin existieren passive Ortsdosimeter, bei denen die Strahlungsdosis beispielsweise mithilfe eines lichtempfindlichen Films über die Zeit aufintegriert wird. Der Film wird in regelmäßigen Abständen von einer Auswertevorrichtung ausgelesen, wobei ein bestimmter Schwärzungsgrad für eine bestimmte Ortsdosis steht. Eine Energieauflösung kann bei passiven Ortsdosimetern beispielsweise dadurch erfolgen, dass benachbart zum Film in bestimmten Bereichen bestimmte Metallplättchen (zum Beispiel aus Kupfer, Blei und dergleichen) mit unterschiedlichen Dicken angeordnet werden, wohingegen in anderen Bereichen keine Metallplättchen beziehungsweise anderweitige schwächende Materialien (insbesondere streuende und/oder absorbierende Materialien) angeordnet werden. Je nach dem Verhältnis der Schwärzungsgrade in den unterschiedlichen Bereichen zueinander können Rückschlüsse auf die Art und Energie der eingefallenen Strahlung gezogen werden.

Neben Filmmaterialien werden zwischenzeitlich auch anderweitige "dosisintegrierende Materialien" verwendet, wie beispielsweise Thermolumineszenz-Detektorelemente aus beispielsweise Lithiumfluoridkristallen. Ein derartiges Ortsdosimeter ist beispielsweise in der deutschen Patentschrift DE 10 2007 054 927 B3 beschrieben.

Es ist anzuerkennen, dass derartige, im Stand der Technik beschriebene Ortsdosimeter in der Regel brauchbare Messwerte liefern, die insbesondere auch die gesetzlichen Anforderungen erfüllen und zum Teil auch deutlich übererfüllen.

Insbesondere unter dem Aspekt der Kostendämpfung und/oder der universellen Einsetzbarkeit beziehungsweise einer besonders einfachen Handhabbarkeit weisen bislang bekannte Ortsdosimetervorrichtungen jedoch oftmals zum Teil gravierende Nachteile auf. Wenn beispielsweise in jeder Arztpraxis (genauer in jedem Raum einer Arztpraxis), in der ein Röntgengerät steht, ein oder sogar mehrere Ortsdosimeter aufgestellt werden müssen, so sollten diese einerseits günstig in der Anschaffung, gleichzeitig aber auch besonders einfach auch von nicht technisch versiertem Personal gehandhabt werden können. Es ist zu beachten, dass die in den Ortsdosimetern vorhandenen Messkarten regelmäßig (wie beispielsweise wöchentlich oder monatlich) ausgetauscht werden müssen. Der Austausch sollte daher möglichst einfach und schnell durchgeführt werden können. Darüber hinaus sollte eine Fehlbedienung der Ortsdosimeter bei einem derartigen Austausch weitestgehend ausgeschlossen sein, da ein Austausch oftmals unter Zeitdruck und von oftmals technisch wenig versiertem Personal durchgeführt wird.

Die US Patenschrift US 5578830 offenbart ein verbessertes Neutronendosimeter.

Es besteht weiterhin ein Bedarf an Ortsdosimetervorrichtungen, die gegenüber von im Stand der Technik bekannten Ortsdosimetervorrichtungen Vorteile aufweisen, insbesondere hinsichtlich Kosten, Einsetzbarkeit und einfacher Handhabbarkeit.

Die Aufgabe der Erfindung wird durch den Gegenstand des unabhängigen Anspruchs gelöst. Vorteilhafte Weiterbildungen der Erfindung sind in den Unteransprüchen definiert.

Es wird vorgeschlagen, eine Ortsdosimetervorrichtung mit mindestens einem Streukörper, wobei der zumindest eine Streukörper zumindest zwei Streukörper-Baugruppen aufweist, derart auszubilden und einzurichten, dass die zumindest zwei Streukörper-Baugruppen zumindest eine Ausrichtungseinrichtung zur gegenseitigen Ausrichtung der zumindest zwei Streukörper-Baugruppen zueinander aufweist. Mithilfe einer derartigen Ausrichtungseinrichtung ist es möglich, dass insbesondere der Zusammenbau der zumindest zwei Streukörper-Baugruppen deutlich vereinfacht und/oder beschleunigt wird. Neben der einfacheren Handhabbarkeit und schnelleren Bedienbarkeit, sodass beispielsweise eine im Inneren der Ortsdosimetervorrichtung befindliche Dosisregistrierungseinrichtung schneller ausgetauscht werden kann, kann darüber hinaus auch die Fehlertoleranz der Ortsdosimetervorrichtung in der Regel deutlich erhöht werden, oftmals bis zur (de facto) Eindeutigkeit beim Zusammenfüge-Vorgang. Auf diese Weise können auf besonders einfache und effektive Weise Messfehler weitestgehend vermieden werden. Dies ist insbesondere bei Dosimetern besonders vorteilhaft, da man sich ansonsten im Nachhinein nie sicher sein kann, welche Dosis just in dem Zeitraum, in dem es zu einem derartigen Messfehler kam, aufgetreten sein könnte. Rein rechtlich und/oder pragmatisch kann man dies zwar dadurch lösen, dass man von Standard-Dosiseinträgen ausgeht (und diese gegebenenfalls mit einem Sicherheitsfaktor multipliziert). Dennoch besteht nach wie vor eine nicht unerhebliche Restunsicherheit. Darüber hinaus können Verfahren zur Feststellung einer derartigen Ersatzdosis sehr kompliziert und zeitaufwändig sein. Die Ausrichtungseinrichtung kann auf an sich beliebige Weise ausgeführt werden, insbesondere unter Verwendung derzeit im Stand der Technik bekannter beziehungsweise im Stand der Technik üblicher Ausrichtungseinrichtungen. Die Ausrichtungseinrichtung kann im Übrigen auch derart ausgebildet sein (gegebenenfalls auch weitergebildet sein), dass diese nicht nur die zumindest zwei Streukörper-Baugruppen zueinander ausrichtet, sondern darüber hinaus noch zusätzliche Baugruppen, wie beispielsweise die eigentliche Dosisregistrierungseinrichtung (oder Teile derselben) beziehungsweise Haltevorrichtungen, Verbindungsvorrichtungen, Befestigungsvorrichtungen, Anzeigevorrichtungen und dergleichen, ausrichtet. Es ist in beliebiger Weise möglich, dass zumindest Teile zumindest einer Ausrichtungseinrichtung gemeinsam und/oder gesondert von zumindest Teilen zumindest einer Verbindungseinrichtung ausgebildet sind. Bevorzugt ist es, wenn zumindest eine Ausrichtungseinrichtung zumindest teilweise unabhängig von zumindest einer Verbindungseinrichtung ausgebildet ist. In einem solchen Fall kann die jeweilige Einrichtung auf ihren jeweiligen Einsatzzweck hin optimiert werden, bzw. kann sich ein Benutzer der Ortsdosimetervorrichtung bei der Handhabung auf den jeweiligen Aspekt konzentrieren. Dadurch kann sich die Handhabung der Ortsdosimetervorrichtung vereinfachen.

Zusätzlich oder alternativ ist es möglich, dass die Ortsdosimetervorrichtung mit zumindest einem Streukörper, wobei der zumindest eine Streukörper zumindest zwei Streukörper-Baugruppen aufweist, derart auszubilden (beziehungsweise weiterzubilden), dass zumindest eine Schnellverbindungseinrichtung zur Verbindung der zumindest zwei Streukörper-Baugruppen aneinander verwendet wird. Auf diese Weise können die beiden Streukörper-Baugruppen besonders schnell miteinander verbunden werden, was insbesondere den Zeitaufwand (und damit korrelierend den Kostenaufwand) für ein Zusammenfügen beziehungsweise für einen Austausch beispielsweise einer Dosisregistrierungseinrichtung, deutlich verringern kann. Dies ist insbesondere bei weit verbreiteten Ortsdosimetervorrichtungen "im Feld" von besonderem Vorteil. Unter einer Schnellverbindungseinrichtung kann eine im Wesentlichen beliebige Schnellverbindungseinrichtung verstanden werden, insbesondere solche Schnellverbindungseinrichtungen, wie sie im Stand der Technik bekannt sind. Insbesondere kann man unter einer Schnellverbindungseinrichtung eine Einrichtung verstehen, welche durch vergleichsweise wenige Handgriffe und/oder durch besonders einfache Handgriffe verschlossen (gegebenenfalls auch geöffnet) werden kann. Zusätzlich oder alternativ kann unter einer Schnellverbindungseinrichtung auch eine Einrichtung verstanden werden, welche zum Verschließen und/oder zum Öffnen im Wesentlichen mit einer einzelnen Hand gehandhabt werden kann.

Der Streukörper, insbesondere die zumindest zwei Streukörper-Baugruppen, können (gegebenenfalls unabhängig vom Vorhandensein einer Schnellverbindungseinrichtung und/oder einer Ausrichtungseinrichtung) aus einem Kunststoffmaterial wie beispielsweise Polyamid gefertigt sein. Erste Versuche haben ergeben, dass derartiges Kunststoffmaterial einerseits günstig und einfach kommerziell erhältlich ist, andererseits bei Verwendung derartiger Materialien die resultierende Ortsdosimetervorrichtung ein gutes Messverhalten aufweisen kann. Insbesondere ist es möglich, mithilfe einer derartigen Ortsdosimetervorrichtung Photonenstrahlung (insbesondere im Röntgenspektrum) messen zu können und/oder die so genannte Umgebungs-Äquivalenzdosis H*(10) bzw. gegebenenfalls auch die Richtungs-Äquivalenzdosis H'(0,07) messen zu können. Insbesondere (aber nicht nur) bei der Verwendung von Kunststoff ist es vorteilhaft, wenn die entsprechenden Materialien eine relativ kleine Kernladungszahl Z und/oder eine niedrige Dichte aufweisen. Falls eine Schnellverbindungseinrichtung Anwendung findet, kann diese im Wesentlichen aus einem beliebigen Material gefertigt sein, da die Schnellverbindungseinrichtung in der Regel in Bereichen vorgesehen werden kann, bei denen die Verwendung auch "ungünstiger" Materialien für die Schnellverbindungseinrichtung keinen beziehungsweise einen nur geringen Effekt auf die Messgenauigkeit hat. So ist es beispielsweise durchaus denkbar, dass als Schnellverbindungseinrichtung an sich bekannte Schlauchschellen aus Metall verwendet werden. Diese können beispielsweise bei Verwendung eines zylindrisch geformten Streukörpers am "oberen" und "unteren" Ende des Zylinders angeordnet werden, wo diese auch bei einer vergleichsweise kleinen Höhe des Zylinders (beispielsweise 5 cm bei einer 3 cm hohen Dosisregistrierungseinrichtungs-Karte) eine Verschlechterung der Messgenauigkeit von in der Regel lediglich einigen wenigen Prozenten (typischerweise 3 Prozent) nach sich ziehen können. In diesem Zusammenhang sollte auch auf die gesetzlichen Grundlagen hingewiesen werden, gemäß derer eine bestimmte Messgenauigkeit nur in einem bestimmten Winkelbereich gefordert wird. Es ist also möglich, dass die beschriebene Verschlechterung der Messgenauigkeit im rechtlichen Sinne völlig unerheblich ist, insbesondere dann, wenn eine geforderte Messgenauigkeit (wie insbesondere eine Messgenauigkeit von ±40 %) eingehalten wird. Möglich und in der Regel vorteilhaft ist es jedoch auch, wenn die Schnellverbindungseinrichtung zumindest teilweise aus einem "vorteilhaften" Material gefertigt ist. Dabei kann es sich um ein Material handeln, welches ähnliche oder gleich gute Eigenschaften wie der eigentliche Streukörper aufweist. Denkbar ist es aber auch, dass die Schnellverbindungseinrichtung schlechtere, jedoch nicht "richtig schlechte" Materialeigenschaften in Bezug auf eine Dosismesseigenschaft aufweist. Beispielsweise können hier Kunststoffe verwendet werden, welche Materialien mit einer hohen Kernladungszahl und/oder eine hohe Dichte aufweisen. Insbesondere können Kunststoffe verwendet werden, welche Materialien mit einer Kernladungszahl aufweisen und/oder eine Dichte aufweisen, die höher ist, als dies beim eigentlichen Streukörper der Fall ist. Grundsätzlich hat sich in ersten Versuchen gezeigt, dass man anstreben sollte, die Dichte der Streukörper so gering wie möglich zu halten. Insbesondere hat sich in diesen ersten Versuchen das Material PE-LD (für low density Polyethylene) und/oder Material mit einer Dichte von 0,915-0,935 g/cm³ als besonders vorteilhaft erwiesen.

Vorteilhaft ist es weiterhin, wenn die Ortsdosimetervorrichtung zumindest einen Aufnahmebereich für zumindest eine, vorzugsweise kartenartig ausgebildete Dosisregistrierungseinrichtung aufweist. Auf diese Weise kann die Ortsdosimetervorrichtung vorteilhaft mit an sich bekannten und in der Praxis verwendeten beziehungsweise verbreiteten Dosisregistrierungseinrichtungen verwendet werden. Insbesondere kann es sich um standardisierte Dosisregistrierungseinrichtungen handeln, wie sie insbesondere auch kommerziell erhältlich sind. Dadurch kann eine schnelle und besonders universelle Einsetzbarkeit der Ortsdosimetervorrichtung gefördert werden. Insbesondere kann die Ortsdosimetervorrichtung dadurch in aller Regel als eine "drop-in"-Lösung (also als unmittelbare Austauschlösung) genutzt werden.

Besonders vorteilhaft ist es, wenn bei der Ortsdosimetervorrichtung zumindest eine Ausrichtungseinrichtung zumindest bereichsweise als Formkomplementäreinrichtung ausgebildet ist. Hierunter sind insbesondere Einrichtungen zu verstehen, welche auf sich einander ergänzenden Formgebungen beruhen. Insbesondere ist beispielsweise an eine Art Zapfen-Rücksprung-Verbindung, Steg-Nut-Verbindung, sich gegenseitig ergänzende Formgebungen, zueinander im Wesentlichen passende Männlich-Weiblich-Verbindungen, steckerartige Verbindungen, Umgreif- beziehungsweise Hintergreifverbindungen und dergleichen zu denken. Wesentlich ist insbesondere, dass aufgrund der Formkomplementäreinrichtung eine Ausrichtung der beiden Streukörper-Baugruppen zueinander erfolgt, die vorzugsweise möglichst weitgehend (lokal und/oder "universal") verdrehsicher beziehungsweise verschiebesicher ist.

Obgleich unterschiedlichste Ausbildungen der zumindest einen Ausbildungseinrichtung, insbesondere der zumindest einen Formkomplementäreinrichtung denkbar sind, ist es bevorzugt, wenn bei der Ortsdosimetervorrichtung zumindest eine Ausrichtungseinrichtung, insbesondere zumindest eine Formkomplementäreinrichtung, zumindest bereichsweise als Nut-Steg-Paareinrichtung ausgebildet ist. Hierdurch kann eine Ausrichtung über einem gegebenenfalls großen Bereich der Ortsdosimetervorrichtung realisiert werden. Dadurch kann beispielsweise ein Verkanten und/oder ein insbesondere unbeabsichtigtes Verdrehen weitgehend vermieden werden. Darüber hinaus kann insbesondere eine Nut-Steg-Paareinrichtung als eine Art von Dichtungseinrichtung wirken (nach Art einer Lamellendichtung) und beispielsweise ein Eindringen von Fremdkörpern beziehungsweise ein Herausfallen von (Teilen) einer Dosisregistriereinrichtung und dergleichen verhindert werden.

Vorteilhaft ist es weiterhin, wenn bei der Ortsdosimetervorrichtung zumindest eine Dichtungseinrichtung vorgesehen ist, welche vorzugsweise im Zusammenhang mit der zumindest einen Formkomplementäreinrichtung ausgebildet ist und/oder welche bevorzugt staubdicht, fluiddicht, flüssigkeitsdicht, gasdicht und/oder vakuumdicht ausgebildet ist. Unter einer Dichtungseinrichtung kann im Wesentlichen jegliche Form von Dichtungseinrichtung verstanden werden. Beispielsweise können in diesem Zusammenhang Gummidichtungen, Dichtungsringe, Silikondichtungen, lamellenartige Dichtungen, Korkdichtungen, Ringdichtungen und dergleichen verstanden werden. Insbesondere ist es möglich, dass zumindest eine Dichtung zumindest bereichsweise von einer zur Aufnahme der Dichtung geeigneten Aufnahmeeinrichtung (wie beispielsweise eine geeignet ausgebildete Nut) aufgenommen wird. Insbesondere ist es möglich, dass zumindest eine Dichtungseinrichtung zumindest bereichsweise im Nutbereich einer Nut-Steg-Einrichtung aufgenommen wird. Hierbei ist es insbesondere möglich, dass die Nut-Steg-Einrichtung basierend auf den Dimensionen der Dichtungseinrichtung geeignet "zusätzlich" vertieft ist und die Dimensionen vorzugsweise derart gewählt sind, dass die Kombination aus Nut, Steg und Dichtungseinrichtung zumindest bereichsweise eine Art Quetsch-Dichtungswirkung bewirkt. Hierdurch kann eine besonders effektive und dichte Dichtung realisiert werden. Aber auch andere Komplementäreinrichtungen können sinnvollerweise mit einer Dichtungseinrichtung ausgebildet werden. Je nach Einsatzgebiet ist es bevorzugt, wenn die Dichtungseinrichtung staubdicht, fluiddicht, flüssigkeitsdicht, gasdicht und/oder vakuumdicht ausgebildet ist. Bei entsprechenden Einsatzgebieten ist auch noch an weiter gehende Dichtigkeiten zu denken, wie beispielsweise fluiddicht bei bestimmten Drücken (insbesondere wasserdicht bei Wasserdrücken von beispielsweise 5 m Wassertiefe, 10 m Wassertiefe, 20 m Wassertiefe, 30 m Wassertiefe, 40 m Wassertiefe oder 50 m Wassertiefe) oder eine Dichtigkeit gegenüber Keimen (Bakterien, Viren) und dergleichen.

Weiterhin kann es vorteilhaft sein, wenn bei der Ortsdosimetervorrichtung insbesondere der zumindest eine Streukörper längs zumindest einer Trennebene geteilt ist, wobei vorzugsweise im Bereich der zumindest einen Trennebene zumindest ein Aufnahmebereich für die zumindest eine Dosisregistrierungseinrichtung vorgesehen ist. Hierdurch kann die Ortsdosimetereinrichtung beispielsweise durch zwei Zylinderhälften realisiert werden, was die Herstellung aus einem einzelnen Zylinderstück gegebenenfalls signifikant erleichtern kann. Aber auch die Herstellung aus anderen geometrischen Körpern kann bei einer derartigen Ausbildungsweise der Ortsdosimetervorrichtung in aller Regel besonders materialsparend, schnell und/oder kostengünstig realisiert werden. Wenn zumindest ein Aufnahmebereich für die zumindest eine Dosimeterregistrierungseinrichtung im Bereich der zumindest einen Trennebene vorgesehen ist, ist es darüber hinaus in der Regel besonders einfach und vorteilhaft, die Dosisregistrierungseinrichtung tauschen zu können. Insbesondere kann die Dosisregistrierungseinrichtung besonders einfach eingefügt und/oder entnommen werden. Ein zeitaufwändiges, "filigranes" Einführen beziehungsweise Entnehmen (was oftmals mit einem Verkanten der Vorrichtungen einhergehen kann und entsprechende Probleme verursachen kann) kann dadurch in aller Regel vermieden werden.

Weiterhin ist es von Vorteil, wenn bei der Ortsdosimetervorrichtung zumindest eine integral zu zumindest einer Streukörper-Baugruppe und/oder durch zumindest eine separat von zumindest einer Streukörper-Baugruppe ausgebildete Schnellverbindungseinrichtung vorgesehen ist. Derartige Ausbildungsweisen haben sich für bestimmte Anwendungsgebiete in ersten Versuchen als besonders vorteilhaft erwiesen. Insbesondere kann eine integral vorgesehene Schnellverbindungseinrichtung verliersicher sein und/oder die Ortsdosimetereinrichtung (beziehungsweise deren Bauteile) kann vorteilhaft als eine Art von Einweg-Einrichtung realisiert werden. Wenn separat ausgebildete Schnellverbindungseinrichtungen vorgesehen sind, kann gegebenenfalls Abfall durch Einwegmaterialien bei einem Auswechseln der Dosisregistrierungseinrichtung vermieden werden, was ebenfalls Vorteile mit sich bringen kann. Gegebenenfalls kann dadurch die Handhabung (geringfügig) komplexer werden, was jedoch nicht notwendigerweise einen relevanten Nachteil darstellen muss.

Weiterhin ist es vorteilhaft, wenn bei der Ortsdosimetervorrichtung zumindest eine Schnellverbindungseinrichtung als selbsthemmende Verbindungseinrichtung, insbesondere als selbstverrastende Verbindungseinrichtung, bevorzugt als lösbare selbsthemmende Verbindungseinrichtung beziehungsweise als lösbare selbstverrastende Verbindungseinrichtung ausgebildet ist. Hierdurch kann das Zusammenfügen der Ortsdosimetervorrichtung in aller Regel besonders einfach gehalten werden. Insbesondere sind keine oder nur wenige Fixierungs-Vorgänge erforderlich. Eine Selbstverrastung kann beispielsweise durch clipsartig verrastende Elemente, Ratschschienen (wie beispielsweise bei Kabelbindern, Schnellschnallen und dergleichen) realisiert werden. Nochmals bevorzugt ist es, wenn die selbstverrastende Verbindungseinrichtung als lösbare selbstverrastende Verbindungseinrichtung ausgebildet ist. Hierdurch kann beispielsweise durch Betätigung eines Handhabungsknopfes oder dergleichen eine schnelle Öffnung der Verbindungseinrichtung realisiert werden. Hierdurch kann insbesondere die Verbindungseinrichtung mehrfach wiederverwendet werden, sodass insbesondere Kosten reduziert werden können. Für selbsthemmende Verbindungseinrichtungen beziehungsweise für lösbare selbsthemmende Verbindungseinrichtungen gilt das Gesagte in Analogie. Grundsätzlich ist es aber auch möglich, dass eine Lösbarkeit beispielsweise durch ein seitliches Verschieben eines Selbsthemmungsbereichs bzw. eines Selbstverrastungsbereichs realisiert wird. Beispielsweise weisen Schnellschlauchklemmen einen Verrastungsbereich mit einer Breite von typischerweise 0,5-1 cm auf (in der Regel entsprechend der Breite der Schnellschlauchklemme). Werden die ineinandergreifenden Verrastungsbereiche seitlich zueinander verschoben, so können die Verrastungsbereiche außer Eingriff kommen, und die Schnellschlauchklemme kann dementsprechend (reversibel) gelöst werden.

Weiterhin ist es bevorzugt, wenn die Ortsdosimetervorrichtung, insbesondere der zumindest eine Streukörper der Ortsdosimetervorrichtung, im Wesentlichen spiegelsymmetrisch zu der zumindest einen Trennebene und/oder spiegelsymmetrisch zu dem zumindest einen Aufnahmebereich für die zumindest eine Dosisregistrierungseinrichtung ausgebildet ist. Auch hierdurch kann der Aufbau der Ortsdosimetervorrichtung nochmals vereinfacht werden. Insbesondere ist bei einem derartigen Aufbau in aller Regel die Herstellung der Ortsdosimetervorrichtung besonders einfach, materialsparend, aus handelsüblichen Elementen realisierbar und/oder besonders kostengünstig.

Eine weitere bevorzugte Ausbildungsform der Ortsdosimetervorrichtung kann sich ergeben, wenn die Ortsdosimetervorrichtung, insbesondere der zumindest eine Streukörper der Ortsdosimetervorrichtung, zumindest eine Dosisregistrierungseinrichtung aufweist, insbesondere zumindest eine aktive und/oder zumindest eine passive Dosisregistrierungseinrichtung aufweist, insbesondere zumindest ein Thermolumineszenz-Detektorelement und/oder zumindest ein Optolumineszenz-Detektorelement aufweist. Aktive Dosisregistrierungseinrichtungen weisen üblicherweise elektronische und/oder elektrische Elemente auf. Insbesondere ist es bei aktiven Dosisregistrierungseinrichtungen in aller Regel möglich, dass die ermittelten Messwerte dynamisch, beispielsweise über ein Kabel, aus der Ortsdosimetervorrichtung herausgeführt werden, wo sie beispielsweise an einem Anzeigeelement dargestellt werden beziehungsweise von einer Computereinrichtung registriert werden (wobei gegebenenfalls Alarmwerte, geeignete Steuerregelungsalgorithmen und dergleichen bei Überschreiten bestimmter Grenzwerte realisiert werden können). Unter einer passiven Dosisregistrierungseinrichtung sind dagegen insbesondere Dosisregistrierungseinrichtungen zu verstehen, welche die auf diese eingestrahlte Dosisleistung mit der Zeit aufintegrieren und in der Regel erst nach Entnahme der Dosisregistrierungseinrichtung in einem entsprechenden Auslesegerät durch geeignete Komponenten ausgelesen werden. In Zusammenhang mit Thermolumineszenz-Detektorelementen (auch als TLD-Elemente für thermische Lumineszenz-Detektorelemente bezeichnet) ist insbesondere an Lithiumfluorid-Kristalle zu denken. Bei Optolumineszenz-Detektorelementen (auch OSL-Elemente für optisch stimulierte Lumineszenz bezeichnet) ist insbesondere an Aluminium-Oxid-Kristalle und/oder Beryllium-Oxid-Kristalle zu denken.

Weiterhin kann es sich als vorteilhaft erweisen, wenn bei der Ortsdosimetervorrichtung zumindest eine zumindest vorzugsweise bereichsweise angeordnete und/oder bereichsweise wirkende Filtereinrichtung vorgesehen ist, die insbesondere in zumindest einem Teilbereich im Bereich des zumindest einen Aufnahmebereichs für die zumindest eine Dosisregistrierungseinrichtung angeordnet ist. Auf diese Weise können beispielsweise unterschiedliche Strahlungsarten voneinander unterschieden werden. Zusätzlich oder alternativ ist es auch möglich, dass unterschiedliche Energiebereiche (gegebenenfalls einer einzelnen) Strahlungsart voneinander unterschieden werden können. Insbesondere ist die Ortsdosimetervorrichtung mit dem vorbeschriebenen Aufbau und/oder dessen Weiterbildungen besonders gut zur Registrierung von Photonenstrahlung geeignet (weil sie insbesondere auch ionisierende Strahlung, welche im Röntgenspektrum oder energetisch darüber liegt, messen kann).

Eine weitere mögliche Ausbildungsform der Ortsdosimetervorrichtung ergibt sich, wenn diese zumindest eine Umhüllungseinrichtung aufweist, welche insbesondere zumindest teilweise als Halteeinrichtung und/oder als Verpackungseinrichtung, insbesondere als sterilisierbare Verpackungseinrichtung ausgebildet ist. Als Umhüllungseinrichtung kann beispielsweise eine Art Haltenetz oder Tüte verwendet werden, welche mit einem Haken beziehungsweise einer Aufhänge-Öse versehen ist. Dadurch kann die Ortsdosimetervorrichtung beispielsweise auch an einer Wand befestigt werden, ohne dass die Ortsdosimetervorrichtung selbst gegebenenfalls aufwändige und/oder das Messergebnis verfälschende beziehungsweise verschlechternde Teile aufweisen muss. Bei Verwendung einer Verpackungseinrichtung kann insbesondere die Dichtigkeit (beispielsweise Fluiddichtigkeit, Bakteriendichtigkeit, Flüssigkeitsdichtigkeit, Staubdichtigkeit oder dergleichen) der Ortsdosimetervorrichtung erhöht werden. Auch ist es möglich, dass hierdurch eine "glattere" Außenoberfläche geschaffen werden kann, die insbesondere keine Rücksprünge oder Nuten aufweist und dadurch besonders einfach und vorteilhaft sterilisiert werden kann. Letzteres ist insbesondere im medizinischen Bereich von besonderem Vorteil.

Bei der Ortsdosimetervorrichtung ist bei zumindest einer der zumindest zwei Streukörper-Baugruppen zumindest bereichsweise zumindest ein Verjüngungsbereich zur Aufnahme zumindest einer Verbindungsvorrichtung vorgesehen. Ein derartiger Verjüngungsbereich kann sowohl endständig, als auch nicht-endständig vorgesehen werden. Mit einem derartigen Verjüngungsbereich ist es beispielsweise möglich, dass beispielsweise eine an der Außenseite der Ortsdosimetervorrichtung anzubringende/angebrachte Verbindungseinrichtung die Außenabmessungen der Ortsdosimetervorrichtung nicht überschreitet. Dies kann von Vorteil sein. Wird ein Verjüngungsbereich endständig vorgesehen ist es möglich, dass die entsprechende Verbindungsvorrichtung beispielsweise seitlich abgezogen werden kann (um auf diese Weise die Ortsdosimetervorrichtung zu öffnen). Wird ein Verjüngungsbereich dagegen nicht-endständig vorgesehen, so kann umgekehrt ein (insbesondere unbeabsichtigtes) Herabrutschen der Verbindungsvorrichtung von der Ortsdosimetervorrichtung vermieden werden. Eine beispielsweise als Kabelbinder ausgebildete Verbindungsvorrichtung kann dann durch einen Seitenschneider (oder dergleichen) durchgeschnitten werden, um auf diese Weise die Ortsdosimetervorrichtung zu öffnen.

Im Folgenden wird die Erfindung anhand vorteilhafter Ausführungsbeispiele und unter Bezugnahme auf die beigefügte Zeichnung näher erläutert. Es zeigen:
- Fig. 1:: Ein bevorzugtes Ausführungsbeispiel eines Ortsdosimeters in demontiertem Zustand in perspektivischer Ansicht;
- Fig. 2:: ein Ausführungsbeispiel eines Ortsdosimeters in teilweise montiertem Zustand in perspektivischer Ansicht;
- Fig. 3:: ein Ausführungsbeispiel eines Ortsdosimeters in teilweise montiertem Zustand in einer schematischen Querschnittsansicht;
- Fig. 4:: ein mögliches Ausführungsbeispiel eines zusammengefügten Ortsdosimeters in unterschiedlichen Draufsichten;
- Fig. 5:: ein weiteres mögliches Ausführungsbeispiel eines Ortsdosimeters in einer schematischen Draufsicht von oben;
- Fig. 6:: ein mögliches Ausführungsbeispiel eines Ortsdosimeters, das von einem sterilen Aufhängebeutel aufgenommen ist;
- Fig. 7:: ein mögliches Ausführungsbeispiel für eine Dosismesskarte in schematischer Draufsicht.

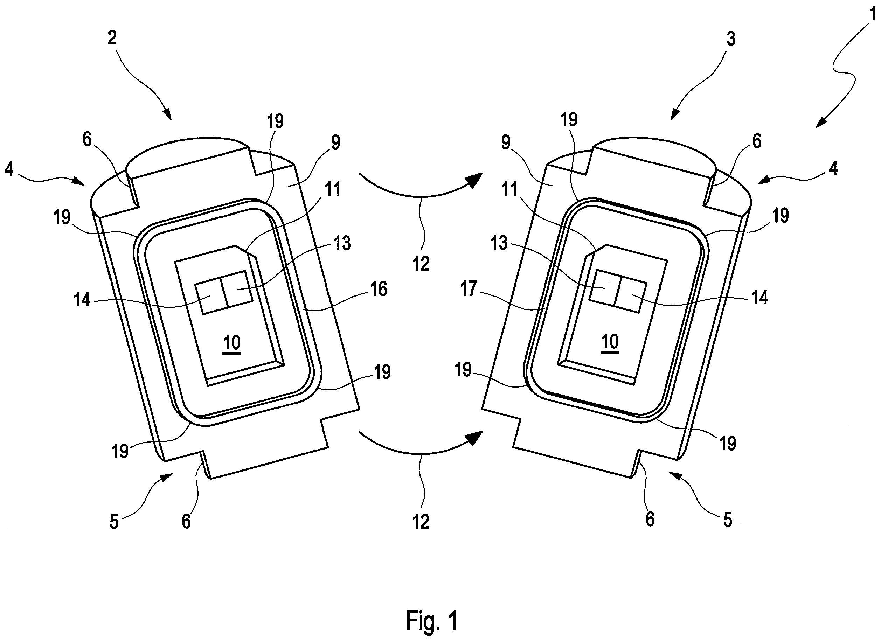

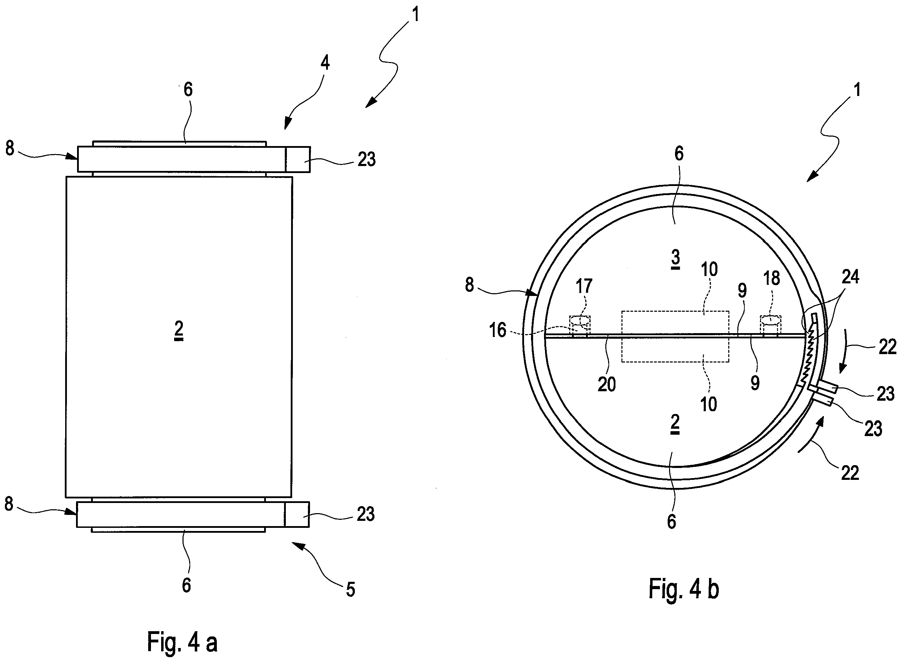

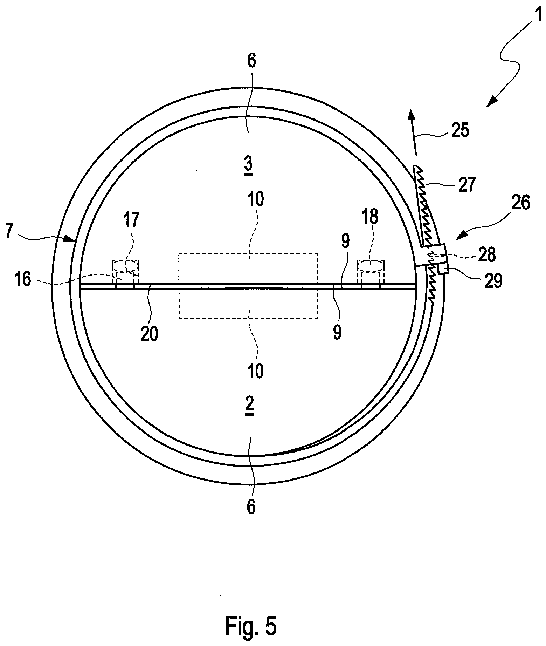

In Figur 1 sind in einer schematischen, perspektivischen Ansicht die beiden Zylinderhälften (2, 3) eines Ortsdosimeters (1) in einem voneinander getrennten Zustand dargestellt. Die beiden Zylinderhälften (2, 3) sind von ihrem grundsätzlichen Aufbau her im Wesentlichen gleichartig aufgebaut. In beiden Fällen handelt es sich um einen halbzylindrischen Gegenstand, wobei die Trennlinie der beiden Zylinderhälften (2, 3) derart gesetzt ist, dass sich zwei im Wesentlichen spiegelsymmetrische Zylinderhälften (2, 3) ergeben, die sich zusammen zu einem zylindrischen Gesamtgegenstand ergänzen. An den beiden Enden (4, 5) (oberes Ende 4, unteres Ende 5) der beiden Zylinderhälften (2, 3) ist jeweils eine Verjüngung (6) an der Zylinderaußenseite vorgesehen. Die Verjüngung (6) dient jeweils zur Aufnahme einer Schnellverschlusseinrichtung, wie beispielsweise eines Kabelbinders (7) (vergleiche Figur 5) oder einer Schnellschlauchklemme (8) (vergleiche Figur 4). Im vorliegend dargestellten Ausführungsbeispiel ist die Verjüngung (6) als endständige Verjüngung ausgebildet, das heißt, dass sich der Durchmesser der jeweiligen Zylinderhälfte (2, 3) am oberen (4) beziehungsweise unteren Ende (5) nicht mehr wieder erweitert. Es ist jedoch ebenso möglich, dass die Verjüngung (6) als nutartige Verjüngung ausgebildet ist und am unmittelbaren oberen (4) beziehungsweise unteren Ende (5) der jeweiligen Zylinderhälfte (2, 3) (oder auch nur einer einzelnen Zylinderhälfte (2, 3)) der Außendurchmesser der Zylinderhälfte (2, 3) einen im Vergleich zur Verjüngung (6) größeren Wert einnimmt, insbesondere sich wieder auf den "ursprünglichen" Zylinderdurchmesser erweitert.

In der Mitte im Bereich der Trennebene der beiden Zylinderhälften (2, 3) ist jeweils eine Kartenaufnahmewanne (10) vorgesehen. Diese kann beispielsweise durch abtragende Materialbearbeitungsverfahren (beispielsweise Fräsen) aus der jeweiligen Zylinderhälfte (2, 3) herausgearbeitet werden. Die Kartenaufnahmewanne (10) weist eine im Wesentlichen rechteckige (beziehungsweise quaderförmige) Formgebung auf. In einer Ecke der Kartenaufnahmewanne (10) ist jedoch ein diagonaler Vorsprung (11) ausgebildet. Die diagonalen Vorsprünge (11) sind in den beiden Zylinderhälften (2, 3) derart angebracht, dass sie sich im zusammengeklappten Zustand einander gegenüber liegen. Die Art des Zusammenklappens der beiden Zylinderhälften (2, 3) ist dabei in Figur 1 durch zwei Zusammenklapp-Pfeile (12) angedeutet.

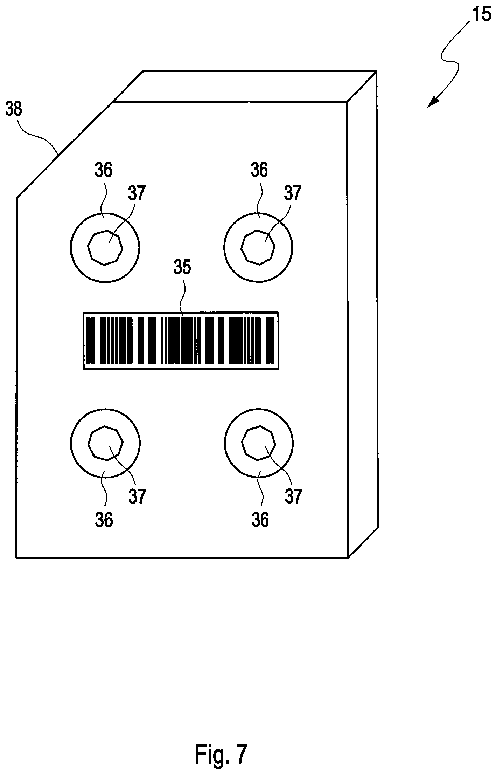

Weiterhin ist in der Kartenaufnahmewanne (10) jeweils ein Kupfermetallplättchen (13) sowie ein Bleimetallplättchen (14) vorgesehen. Grundsätzlich ist es selbstverständlich auch möglich, ein gleichartiges Material (insbesondere Metall) mit unterschiedlichen Dicken zu verwenden. Auch eine Kombination von unterschiedlichen Materialien (bzw. Materialzusammensetzungen) und unterschiedlichen Materialdicken ist möglich und in der Regel auch von Vorteil. Hierdurch wird die vom Ortsdosimeter (1) zu registrierende Strahlung (insbesondere Photonenstrahlung) in den jeweils zu den Metallplättchen (13, 14) benachbarten Bereichen der Dosismesskarte (15) (siehe auch Figur 7) unterschiedlich stark gedämpft. Bei einer Auswertung der Dosismesskarte (15) kann dadurch auf die Energieverteilung (gegebenenfalls auch auf unterschiedliche Arten von Strahlung) im Rahmen der Auswertung rückgeschlossen werden. Auch hier sind die Kupfermetallplättchen (13) bzw. die Bleimetallplättchen (14) in den beiden Zylinderhälften (2, 3) so angeordnet, dass diese im zusammengeklappten Zustand übereinander liegend zu liegen kommen.

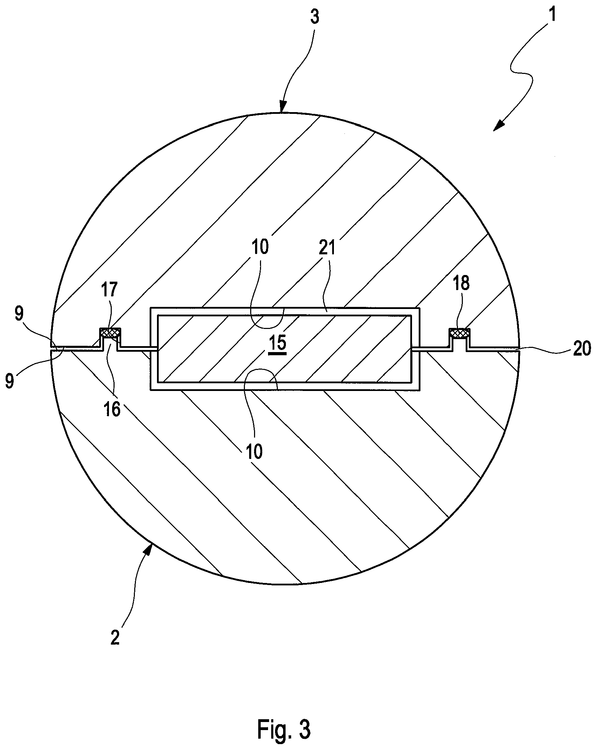

Weiterhin ist in Figur 1 (vergleiche auch mit Figur 3) in der ersten der beiden Zylinderhälften (2) ein vorspringender umlaufender Steg (16) zu erkennen, der aus der Trennebene (9) herausragt. Formkomplementär hierzu ist in der zweiten Zylinderhälfte (3) eine umlaufende Nut (17) vorgesehen. Steg (16) und Nut (17) sind derart ausgebildet, dass sie im zusammengefügten Zustand ineinander greifen (vergleiche auch Figur 3). Die Dimensionierung der Tiefe der Nut (17) sowie der Höhe des Stegs (16) ist dabei im vorliegend dargestellten Ausführungsbeispiel so gewählt, dass zwischenliegend noch eine umlaufende Ringdichtung (18) (die selbstverständlich auch eine Formgebung aufweisen kann, die der Formgebung von Steg (16) beziehungsweise Nut (17) entspricht), eingelegt werden kann.

Im vorliegend dargestellten Ausführungsbeispiel weisen sowohl Steg (16), als auch Nut (17) eine im Wesentlichen rechteckige Form mit abgerundeten Eckbereichen (19) auf, sodass eine zwischen Nut (17) und Steg (16) eingelegte Ringdichtung (18) im Bereich der Ecken keiner übermäßigen Biegung ausgesetzt ist. Die Formgebung der Steg-Nut-Paarung (16, 17) ist vorliegend derart gewählt, dass die beiden Zylinderhälften (2, 3) einerseits in der in Figur 1 zu erkennenden Position aufeinander gesetzt werden können, andererseits auch in einer um 180° dazu versetzten Position. Um ein derartiges Verdrehen auszuschließen, ist es selbstverständlich möglich, dass Steg (16) und Nut (17) mit einer von einer Rechteckform abweichenden Formgebung ausgebildet werden (beispielsweise eine diagonale Anschrägung in einem der Eckbereiche (19), beispielsweise analog zum diagonalen Vorsprung (11) der Kartenaufnahmewanne (10)). Zusätzlich oder alternativ können noch Zapfen und Blindlöcher, beispielsweise im Bereich der Trennebene (9) vorgesehen werden.

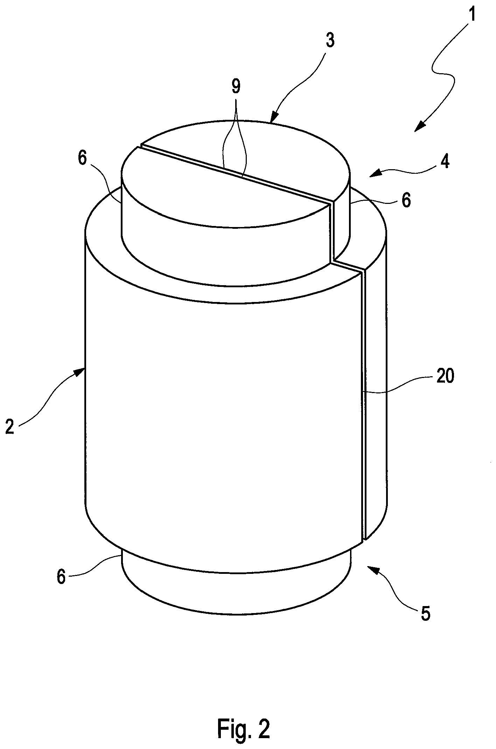

In Figur 2 sind die beiden Zylinderhälften (2, 3) des Ortsdosimeters (1) im zusammengeklappten Zustand in einer perspektivischen Ansicht dargestellt. Zusätzlich ist im Bereich der Trennebene (9) ein verbleibender Fügespalt (20) zu erkennen. Grundsätzlich kann durch diesen Fügespalt (9) Material, wie beispielsweise Staub, Flüssigkeit, Gas, Luftfeuchtigkeit und dergleichen, von außen in Richtung der Kartenaufnahmewanne (10) vordringen, und dadurch einerseits durch Ablagerungen die Messergebnisse verfälschen, andererseits aber auch den Innenraum des Ortsdosimeters (1), beispielsweise durch Korrosion, schädigen. Dies betrifft einerseits Teile des Ortsdosimeters (1) selbst, wie insbesondere die Kupfermetallplättchen (13) sowie die Bleimetallplättchen (14), als auch die im Betriebszustand des Ortsdosimeters in der Kartenaufnahmewanne (10) angeordnete Dosismesskarte (15). Beim vorliegend dargestellten Ausführungsbeispiel bildet jedoch die umlaufende Nut-Steg-Paarung (16, 17) zusammen mit der dazwischen aufgenommenen umlaufenden Ringdichtung (18) eine wirksame Barriere, sodass das vorliegend dargestellte Ausführungsbeispiel eines Ortsdosimeters (1) auch für den Außeneinsatz ("Outdoor"-Einsatz) geeignet ist. Dies ist eine wesentliche Verbesserung gegenüber bekannten Ortsdosimetern.

Weiterhin ist in Figur 2 zu erkennen, dass die Außenseite des resultierenden Zylinders des Ortsdosimeters (1) im Wesentlichen bündig ist (sieht man einmal vom meist unvermeidlichen Fügespalt (20) ab. Darüber hinaus ist bei der in Figur 2 dargestellten Ansicht noch kein Verschlussmittel (beispielsweise Kabelbinder (7) oder Schnellschlauchklemme (8)) im Bereich der umlaufenden Verjüngung (6) am oberen (4) beziehungsweise unteren Ende (5) des Ortsdosimeters (1) angebracht. In der Realität würden also die beiden Zylinderhälften (2, 3) bei der in Figur 2 dargestellten Ansicht leicht "auseinander fallen" können.

In Figur 3 ist ein Querschnitt durch ein zusammengeklapptes Ortsdosimeter (1) dargestellt. Auch hier sind die erste Zylinderhälfte (2) sowie die zweite Zylinderhälfte (3) zu erkennen. Weiterhin sind die Kartenaufnahmewannen (10) der beiden Zylinderhälften (2, 3) zu erkennen, die im zusammengefügten Zustand einen quaderartigen Hohlraum (21) im Inneren des Ortsdosimeters (1) bilden. Bei der in Figur 3 gezeigten Darstellung befindet sich im Inneren des Hohlraumes (21) eine Dosismesskarte (15). Schließlich sind noch im Bereich der Trennebene (9) der beiden Zylinderhälften (2, 3) der bereits beschriebene Steg (16) sowie die bereits beschriebene Nut (17) mitsamt der dazwischen eingeklemmten Ringdichtung (18) zu erkennen. Wie man Figur 3 entnehmen kann, ist die Ringdichtung (18) gequetscht, sodass eine hohe Dichtigkeit resultiert.

In den Figuren 4, 5 ist dargestellt, wie die beiden Zylinderhälften (2, 3) des Ortsdosimeters (1) unter Verwendung von Verbindungseinrichtungen (7, 8), die im Bereich der Verjüngung (6) der beiden Zylinderhälften (2, 3) angebracht werden, fest miteinander verbunden werden können.

In Figur 4a wird zur Befestigung der beiden Zylinderhälften (2, 3) des Ortsdosimeters (1) aneinander sowohl am oberen (4), als auch am unteren Ende (5) eine Schnellschlauchklemme (8) aus einem Kunststoffmaterial aufgesetzt. Diese kann beispielsweise durch eine Zange (Fügerichtung (22) durch Doppelpfeile in Figur 4b dargestellt), die an die beiden vorspringenden Griffbereiche (23) angesetzt wird, verschlossen werden. Bei der Durchführung des Fügevorgangs verrasten dabei die beiden Verrastbereiche (24) der Schnellschlauchklemmen (8) miteinander. Mit kommerziellen Schnellschlauchklemmen und einer Zange können dabei problemlos Fügekräfte aufgebracht werden, mit denen eine Druckdichtigkeit des Ortsdosimeters (1) von 5 bar und mehr sicher realisiert werden kann. Dadurch ist ein Außeneinsatz der Ortsdosimeter (1) problemlos möglich.

Kommerziell erhältliche Standard-Schnellschlauchklemmen (8) weisen keine unmittelbare Möglichkeit auf, die beiden Verrastbereiche (24) außer Eingriff zu bringen. Jedoch ist es bei dem vorliegend vorgestellten Ortsdosimeter (1) problemlos möglich, die Schnellschlauchklemmen (8) seitlich nach oben (4) beziehungsweise nach unten (5) von den Verjüngungen (6) nach außen zu drücken. Dadurch kann man die beiden Zylinderhälften (2, 3) des Ortsdosimeters (1) problemlos wieder voneinander trennen. Die "weggedrückten" Schnellschlauchklemmen (8) sind anschließend wieder kraftfrei, sodass diese durch seitliches In-sich-Verdrehen der Schnellschlauchklemmen (8) im Bereich der Verrastbereiche (24) so verbogen werden können, dass die Verrastbereiche (24) seitlich außer Eingriff zueinander kommen. Auf diese Weise sind die Schnellschlauchklemmen (8) in aller Regel problemlos mehrfach wieder verwendbar.

In Figur 5 ist dargestellt, dass das Ortsdosimeter (1) aber auch auf abweichende Weise "geschlossen" werden kann. Im in Figur 5 dargestellten Ausführungsbeispiel ist dazu im Bereich der Verjüngungen (6) ein Kabelbinder (7) angebracht. Dieser kann in an sich bekannter Weise durch Ziehen (25) in Pfeilrichtung zusammengezogen werden. Eine Verschlussanordnung (26) aus einem Raststangenbereich (27) und einer Eingriffsfeder (28) ermöglicht einen einfachen, widerhakenartigen Verschluss des Ortsdosimeters (1). Zusätzlich verfügt der in Figur 5 dargestellte Kabelbinder (7) noch über eine Öffnungstaste (29), mit der die Eingriffsfeder (28) außer Eingriff mit dem Raststangenbereich (27) gebracht werden kann. Dadurch kann die Verschlussanordnung (26) - und damit der Kabelbinder (7) - mehrfach reversibel geschlossen und geöffnet werden. Dadurch kann das Ortsdosimeter (1) auf besonders einfache Weise geöffnet werden, beispielsweise, um die in der Kartenaufnahmewanne (10) befindliche Dosismesskarte (15) in regelmäßigen Abständen auszutauschen.

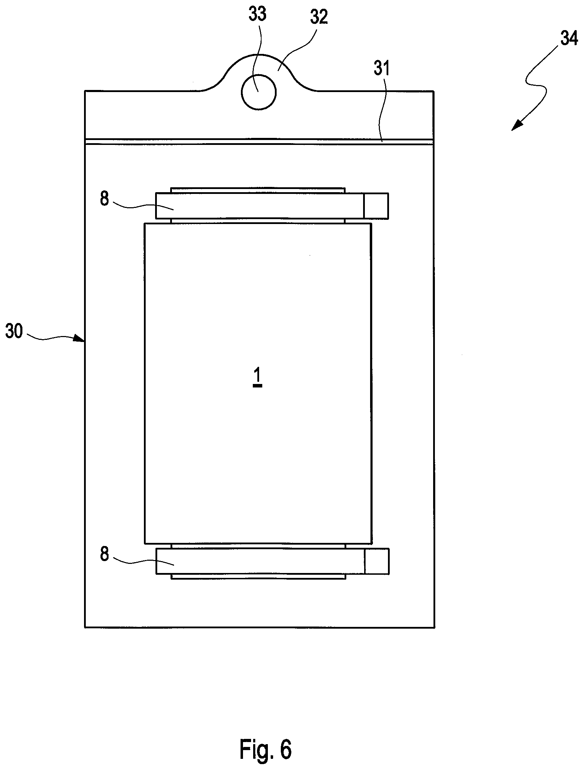

In Figur 6 ist schließlich noch dargestellt, wie ein Ortsdosimeter (1) (vorliegend mit Schnellschlauchklemmen (8) verschlossen; eine andere Verschlussmöglichkeit ist jedoch ebenso problemlos denkbar) in einen Verschlussbeutel (30) eingesteckt ist. Der Verschlussbeutel (30) weist einen Verschlussbereich (31) auf, mit dem das Innere des Verschlussbeutels (30) reversibel geöffnet und geschlossen werden kann. Bei Verwendung eines Verschlussbeutels (30) ist es beispielsweise möglich, die "Gesamtanordnung" (34) aus Ortsdosimeter (1) und Verschlussbeutel (30) einfacher sterilisieren zu können, was insbesondere im medizinischen Bereich von Vorteil ist. In diesem Zusammenhang ist darauf hinzuweisen, dass der in aller Regel nicht zu vermeidende Fügespalt (20) einen schwer zu sterilisierenden Aufnahmeraum für Viren und Bakterien bilden kann. Dieses Problem kann durch Verwendung eines Verschlussbeutels (30) auf einfache und elegante Weise umgangen werden.

Das in Figur 6 zu erkennende Ausführungsbeispiel eines Verschlussbeutels weist darüber hinaus noch eine Lasche (32) auf, in deren Bereich ein Loch (33) vorgesehen ist. Mithilfe dieses Lochs (33) kann das Ortsdosimeter (1) leicht an einem Haken oder dergleichen aufgehängt werden. Da das Ortsdosimeter üblicherweise ein Gewicht im Bereich von 100 g aufweist, ist es in aller Regel nicht erforderlich, das Loch (33) (zusätzlich zur Lasche (32)) speziell zu verstärken. Es ist jedoch auch möglich, dass im Bereich des Lochs (33) Verstärkungselemente vorgesehen werden.

Selbstverständlich ist es auch möglich, den Verschlussbeutel (30) ohne Lasche (32) und/oder Loch (33) auszubilden.

Weiterhin ist es möglich (beispielsweise für einen Außeneinsatz des Ortsdosimeters (1)) anstelle eines geschlossenen Verschlussbeutels (30) ein Netz mit einer entsprechend großen Anzahl an Durchbrüchen vorzusehen. Dadurch kann gegebenenfalls die Messgenauigkeit des Ortsdosimeters (1) (beziehungsweise der "Gesamtanordnung" (34)) nochmals leicht verbessert werden.

Es ist darauf hinzuweisen, dass das Folienmaterial des Verschlussbeutels (30) eine typischerweise nur geringe Dicke aufweist. Dadurch sind die Verschlechterungen der Messgenauigkeit durch das Vorsehen eines Verschlussbeutels (30) in aller Regel minimal und können meist sogar vollständig vernachlässigt werden. Gegebenenfalls kann das Vorhandensein eines Verschlussbeutels (30) auch rechnerisch bei der Auswertung der Dosismesskarte (15) berücksichtigt werden.

In Figur 7 ist schließlich noch ein mögliches Ausführungsbeispiel einer Dosismesskarte (15) dargestellt. Vorliegend handelt es sich um eine handelsübliche Standard-Dosismesskarte (15), bei der in insgesamt vier Aufnahmebereichen (36) jeweils ein Dosismesskristall (37) vorgesehen ist. Bei dem Dosismesskristall (37) kann es sich in beliebiger Weise um ein Thermolumineszenz-Dosismesskristall (beispielsweise aus Lithiumfluorid) und/oder um ein Optolumineszenz-Dosismesskristall (beispielsweise aus Aluminium-Oxid und/oder aus Beryllium-Oxid) handeln. Auch sind Dosismesskarten (15), die unterschiedliche Typen von Dosismesskristallen (37) aufweisen, denkbar.

In Figur 7 ist in einem Eckbereich der Dosismesskarte (15) eine diagonale Abschrägung (38) vorhanden. In Kombination mit den diagonalen Vorsprüngen (11) der Kartenaufnahmewanne (10) des Ortsdosimeters (1) kann die Dosismesskarte (15) daher nur korrekt-lagerichtig in das Ortsdosimeter (1) eingesetzt werden (sieht man einmal von krassen bis mutwilligen Fehlbedienungen ab).

Schließlich ist in Figur 7 noch ein Strichcode (35) (Bar-Code) dargestellt, mit dem die Auswertung an einem zentralen Ort vereinfacht werden kann. Insbesondere kann durch den Strichcode (39) ein maschinelles Lesen und Auswerten (einschließlich automatisierten Zuordnen) einer Kartennummer der Dosismesskarte (15) erleichtert werden.

**Bezugszeichenliste:**

| | |
|---|---|
| 1. Ortsdosimeter | 20. Fügespalt |
| 2. erste Zylinderhälfte | 21. Hohlraum |
| 3. zweite Zylinderhälfte | 22. Fügerichtung |
| 4. oberes Ende | 23. Griffbereiche |
| 5. unteres Ende | 24. Verrastbereiche |
| 6. Verjüngung | 25. Zugrichtung |
| 7. Kabelbinder | 26. Verschlussanordnung |
| 8. Schnellschlauchklemme | 27. Raststangenbereich |
| 9. Trennebene | 28. Eingriffsfeder |
| 10. Kartenaufnahmewanne | 29. Öffnungstaste |
| 11 .diagonaler Vorsprung | 30. Verschlussbeutel |
| 12.Zuklapp-Pfeile | 31. Verschlussbereich |
| 13. Kupfermetallplättchen | 32. Lasche |
| 14. Bleimetallplättchen | 33. Loch |
| 15.Dosismesskarte | 34. Gesamtanordnung |
| 16. Steg | 35. Strichcode |
| 17. Nut | 36. Aufnahmebereich |
| 18. Ringdichtung | 37. Dosismesskristall |
| 19. Eckbereich | 38. diagonale Abschrägung |

## Patentansprüche

1. Ortsdosimetervorrichtung (1) mit mindestens einem Streukörper (2, 3), aufweisend zumindest zwei Streukörper-Baugruppen (2, 3), wobei die zumindest zwei Streukörper-Baugruppen (2, 3) zumindest eine Ausrichtungseinrichtung (16, 17) zur gegenseitigen Ausrichtung der zumindest zwei Streukörper-Baugruppen (2, 3) zueinander aufweisen, **dadurch gekennzeichnet, dass** bei zumindest einer der beiden Streukörper-Baugruppen (2, 3) zumindest bereichsweise zumindest ein Verjüngungsbereich (6) vorgesehen ist zur Aufnahme einer Verbindungseinrichtung (7, 8).

2. Ortsdosimetervorrichtung (1) nach Anspruch 1, **dadurch gekennzeichnet, dass** der zumindest eine Verjüngungsbereich (6) endständig oder nicht endständig ist.

3. Ortsdosimetervorrichtung (1) nach Anspruch 1 oder 2, **gekennzeichnet durch** zumindest einen Aufnahmebereich (10) für zumindest eine, vorzugsweise kartenartig ausgebildete Dosisregistrierungseinrichtung (15).

4. Ortsdosimetervorrichtung (1) nach einem der vorangehenden Ansprüche, **dadurch gekennzeichnet, dass** zumindest eine Ausrichtungseinrichtung (16, 17) zumindest bereichsweise als Formkomplementäreinrichtung (16, 17) ausgebildet ist.

5. Ortsdosimetervorrichtung (1) nach einem der vorangehenden Ansprüche, insbesondere nach Anspruch 4, **dadurch gekennzeichnet, dass** zumindest eine Ausrichtungseinrichtung (16, 17), insbesondere zumindest eine Formkomplementäreinrichtung (16, 17), zumindest bereichsweise als Nut-Steg-Paareinrichtung (16, 17) ausgebildet ist.

6. Ortsdosimetervorrichtung (1) nach einem der vorangehenden Ansprüche, insbesondere nach Anspruch 4 oder 5, **gekennzeichnet durch** zumindest eine Dichtungseinrichtung (16, 17, 18), welche vorzugsweise im Zusammenhang mit der zumindest einen Formkomplementäreinrichtung (16, 17) ausgebildet ist und/oder welche bevorzugt staubdicht, fluiddicht, flüssigkeitsdicht, gasdicht und/oder vakuumdicht ausgebildet ist.

7. Ortsdosimetervorrichtung (1) nach Anspruch 3, **dadurch gekennzeichnet, dass** die Ortsdosimetervorrichtung (1), insbesondere der zumindest eine Streukörper (2, 3) längs zumindest einer Trennebene (9) geteilt ist, wobei vorzugsweise im Bereich der zumindest einen Trennebene (9) zumindest ein Aufnahmebereich (10) für die zumindest eine Dosisregistrierungseinrichtung (15) vorgesehen ist.

8. Ortsdosimetervorrichtung (1) nach einem der vorangehenden Ansprüche, **gekennzeichnet durch** zumindest eine separat von zumindest einer Streukörper-Baugruppe (2, 3) ausgebildete Schnellverbindungseinrichtung (7, 8).

9. Ortsdosimetervorrichtung (1) nach Anspruch 8, **dadurch gekennzeichnet, dass** zumindest eine Schnellverbindungseinrichtung (7, 8) als selbsthemmende Verbindungseinrichtung (24, 27, 28), insbesondere als selbstverrastende Verbindungseinrichtung (24, 27, 28), bevorzugt als lösbare selbsthemmende Verbindungseinrichtung (29) bzw. als lösbare selbstverrastende Verbindungseinrichtung (29) ausgebildet ist.

10. Ortsdosimetervorrichtung (1) nach Anspruch 3 oder 7, **dadurch gekennzeichnet, dass** die Ortsdosimetervorrichtung (1), insbesondere der zumindest eine Streukörper (2, 3) im Wesentlichen spiegelsymmetrisch zur der zumindest einen Trennebene (9) und/oder spiegelsymmetrisch zu dem zumindest einen Aufnahmebereich (10) für die zumindest eine Dosisregistrierungseinrichtung (15) ausgebildet ist.

11. Ortsdosimetervorrichtung (1) nach einem der vorangehenden Ansprüche, **dadurch gekennzeichnet, dass** die Ortsdosimetervorrichtung (1), insbesondere der zumindest eine Streukörper (2, 3) zumindest eine Dosisregistrierungseinrichtung (15, 37) aufweist, insbesondere zumindest eine aktive und/oder passive Dosisregistrierungseinrichtung (15, 37) aufweist, insbesondere zumindest ein Thermolumineszenz-Detektorelement (37) und/oder zumindest ein Optolumineszenz-Detektorelement (37) aufweist.

12. Ortsdosimetervorrichtung (1) nach Anspruch 3, **gekennzeichnet durch** zumindest eine vorzugsweise bereichsweise angeordnete und/oder bereichsweise wirkende Filtereinrichtung (13, 14), die insbesondere in zumindest einem Teilbereich im Bereich des zumindest einen Aufnahmebereichs (10) für die zumindest eine Dosisregistrierungseinrichtung (15) angeordnet ist.

13. Ortsdosimetervorrichtung (1) nach einem der vorangehenden Ansprüche, **gekennzeichnet durch** zumindest eine Umhüllungseinrichtung (30), welche insbesondere zumindest teilweise als Halteeinrichtung (33) und/oder als Verpackungseinrichtung (30), insbesondere als sterilisierbare Verpackungseinrichtung (30) ausgebildet ist.

## Claims

1. Area dosimeter device (1) with at least one scattering body (2, 3), having at least two scattering body assemblies (2, 3), where the at least two scattering body assemblies (2, 3) have at least one alignment device (16, 17) for mutual alignment of the at least two scattering body assemblies (2, 3) to one another, **characterized in that** in at least one of the two scattering body assemblies (2, 3) at least one tapered area (6) is provided at least in some areas for receiving a connection device (7, 8).

2. Area dosimeter device (1) according to claim 1, **characterized in that** the at least one tapered area (6) is terminal or non-terminal.

3. Area dosimeter device (1) according to claim 1 or 2, **characterized by** at least one receiving area (10) for at least one dose registration device (15), preferably of card-type design.

4. Area dosimeter device (1) according to one of the preceding claims, **characterized in that** at least one alignment device (16, 17) is designed at least in some areas as a shape-complementary device (16, 17).

5. Area dosimeter device (1) according to one of the preceding claims, in particular according to claim 4, **characterized in that** at least one alignment device (16, 17), in particular at least one shape-complementary device (16, 17), is designed at least in some areas as a groove-ridge paired device (16, 17).

6. Area dosimeter device (1) according to one of the preceding claims, in particular according to claim 4 or 5, **characterized by** at least one sealing device (16, 17, 18), which is designed preferably in connection with the at least one shape-complementary device (16, 17) and/or which is designed preferably dust-tight, fluid-tight, liquid-tight, gas-tight and/or vacuum-tight.

7. Area dosimeter device (1) according to claim 3, **characterized in that** the area dosimeter device (1), in particular the at least one scattering body (2, 3), is split along at least one separation plane (9), where at least one receiving area (10) for the at least one dose registration device (15) is provided preferably in the area of the at least one separation plane (9).

8. Area dosimeter device (1) according to one of the preceding claims, **characterized by** at least one rapid-connection device (7, 8) designed separate from at least one scattering body assembly (2, 3).

9. Area dosimeter device (1) according to claim 8, **characterized in that** at least one rapid-connection device (7, 8) is designed as a self-locking connection device (24, 27, 28), in particular as a self-engaging connection device (24, 27, 28), preferably as a releasable self-locking connection device (29) or as a releasable self-engaging connection device (29).

10. Area dosimeter device (1) according to claim 3 or 7, **characterized in that** the area dosimeter device (1), in particular the at least one scattering body (2, 3), is designed substantially mirror-symmetrical to the at least one separation plane (9) and/or mirror-symmetrical to the at least one receiving area (10) for the at least one dose registration device (15).

11. Area dosimeter device (1) according to one of the preceding claims, **characterized in that** the area dosimeter device (1), in particular the at least one scattering body (2, 3), has at least one dose registration device (15, 37), in particular has at least one active and/or passive dose registration device (15, 37), and in particular has at least one thermoluminescence detector element (37) and/or at least one optoluminescence detector element (37).

12. Area dosimeter device (1) according to claim 3, **characterized by** at least one filtering device (13, 14) preferably arranged in some areas and/or acting in some areas, which in particular is arranged in at least one part-area in the area of the at least one receiving area (10) for the at least one dose registration device (15).

13. Area dosimeter device (1) according to one of the preceding claims, **characterized by** at least one enclosing device (30), which in particular is designed at least partially as a holding device (33) and/or as a packaging device (30), in particular as a sterilizable packaging device (30).

## Revendications

1. Dosimètre d'ambiance (1) avec au moins un corps de dispersion (2, 3), présentant au moins deux modules de corps de dispersion (2, 3), sachant que lesdits au moins deux modules de corps de dispersion (2, 3) présentent au moins un dispositif d'alignement (16, 17) pour l'alignement réciproque desdits au moins deux modules de corps de dispersion (2, 3) l'un par rapport à l'autre, **caractérisé en ce qu'**est prévue au moins partiellement, pour au moins un des deux modules de corps de dispersion (2, 3), au moins une zone de rétrécissement (6) pour accueillir un dispositif de jonction (7, 8).

2. Dosimètre d'ambiance (1) selon la revendication 1, **caractérisé en ce que** ladite au moins une zone de rétrécissement (6) est située en extrémité ou n'est pas située en extrémité.

3. Dosimètre d'ambiance (1) selon la revendication 1 ou 2, caractérisé en au moins une zone de logement (10) pour au moins un dispositif d'enregistrement des doses (15) conçu de préférence sous forme de carte.

4. Dosimètre d'ambiance (1) selon une des revendications précédentes, **caractérisé en ce qu'**au moins un dispositif d'alignement (16, 17) est conçu au moins partiellement sous forme de dispositif à complémentarité de forme (16, 17).

5. Dosimètre d'ambiance (1) selon une des revendications précédentes, notamment selon la revendication 4, **caractérisé en ce qu'**au moins un dispositif d'alignement (16, 17), notamment au moins un dispositif à complémentarité de forme (16, 17), est conçu au moins partiellement sous forme de paire rainure-nervure (16, 17).

6. Dosimètre d'ambiance (1) selon une des revendications précédentes, notamment selon la revendication 4 ou 5, caractérisé en au moins un dispositif d'étanchéité (16, 17, 18) qui est conçu de préférence en relation avec ledit au moins un dispositif à complémentarité de forme (16, 17) et/ou qui est conçu de préférence de manière à être étanche à la poussière, aux fluides, aux liquides, aux gaz et/ou au vide.

7. Dosimètre d'ambiance (1) selon la revendication 3, **caractérisé en ce que** le dosimètre d'ambiance (1), notamment ledit au moins un corps de dispersion (2, 3) est divisé au moins le long d'un plan de séparation (9), sachant qu'au moins une zone de logement (10) pour ledit au moins un dispositif d'enregistrement des doses (15) est prévue de préférence dans la zone dudit au moins un plan de séparation (9).

8. Dosimètre d'ambiance (1) selon une des revendications précédentes, caractérisé en au moins un dispositif de jonction rapide (7, 8) constitué séparément d'au moins un module de corps de dispersion (2, 3).

9. Dosimètre d'ambiance (1) selon la revendication 8, **caractérisé en ce qu'**au moins un dispositif de jonction rapide (7, 8) est conçu sous forme de dispositif de jonction autobloquant (24, 27, 28), notamment sous forme de dispositif de jonction s'auto-enclenchant (24, 27, 28), de préférence sous forme de dispositif de jonction autobloquant, amovible (29) ou sous forme de dispositif de jonction s'auto-enclenchant, amovible (29).

10. Dosimètre d'ambiance (1) selon la revendication 3 ou 7, **caractérisé en ce que** le dosimètre d'ambiance (1), notamment ledit au moins un corps de dispersion (2, 3), est constitué essentiellement selon une symétrie spéculaire par rapport audit au moins un plan de séparation (9) et/ou selon une symétrie spéculaire par rapport à ladite au moins une zone de logement (10) pour ledit au moins un dispositif d'enregistrement des doses (15).

11. Dosimètre d'ambiance (1) selon une des revendications précédentes, **caractérisé en ce que** le dosimètre d'ambiance (1), notamment ledit au moins un corps de dispersion (2, 3), présente au moins un dispositif d'enregistrement des doses (15, 37), notamment au moins un dispositif d'enregistrement des doses (15, 37) actif et/ou passif, notamment au moins un élément détecteur de thermoluminescence (37) et/ou au moins un élément détecteur d'optoluminescence (37).

12. Dosimètre d'ambiance (1) selon la revendication 3, **caractérisé par** moins un dispositif filtrant (13, 14) disposé et/ou agissant de préférence par zones et disposé notamment dans au moins une zone partielle au niveau de ladite au moins une zone de logement (10) pour ledit au moins un dispositif d'enregistrement des doses (15).

13. Dosimètre d'ambiance (1) selon une des revendications précédentes, caractérisé en au moins un dispositif d'enveloppe (30) qui est conçu notamment au moins partiellement sous forme de dispositif de maintien (33) et/ou de dispositif d'emballage (30), notamment sous forme de dispositif d'emballage stérilisable (30).
